# EUROPÄISCHE PATENTSCHRIFT

(11) **EP 3 650 839 B1**
(45) Veröffentlichungstag und Bekanntmachung des Hinweises auf die Patenterteilung: **02.11.2022**
(21) Anmeldenummer: 19207852.5
(22) Anmeldetag: 08.11.2019
(51) Int. Cl.: G01N 21/35, G01N 21/90

(54) **LABOR-GASMESSGERÄT**
LABORATORY GAS MEASURING DEVICE
APPAREIL DE MESURE DES GAZ DE LABORATOIRE

(30) Priorität: 09.11.2018 AT 509632018
(43) Veröffentlichungstag der Anmeldung: 13.05.2020
(73) Patentinhaber: ACM-Automatisierung, Computertechnik, Meß- und Regeltechnik GmbH, 1140 Wien (AT)
(72) Erfinder: HARRAUER, Eduard, 1140 Wien (AT); BOJANOWSKY, Harald, 1140 Wien (AT)
(74) Vertreter: SONN Patentanwälte OG

(56) Entgegenhaltungen:
- WO-A1-99/59738
- WO-A1-2016/051341
- JP-A- H05 126 761
- JP-A- 2002 013 925
- US-A- 5 473 161

## Beschreibung

Die Erfindung betrifft eine Vorrichtung zur Ermittlung der Konzentration eines Gases in einem Behälter, mit einer Halterung zur Aufnahme eines Behälters, mit einer Messeinrichtung zur Aufnahme eines Transmissionsspektrums des Behälters in einem Detektionsbereich und mit einer mit der Messeinrichtung verbundenen Auswerteelektronik zur Ermittlung der Konzentration eines Gases auf Basis mindestens eines aufgenommenen Transmissionsspektrums. Außerdem betrifft die Erfindung ein Verfahren zur Ermittlung der Konzentration eines Gases in einem Behälter, umfassend: Aufnehmen mindestens eines Transmissionsspektrums des Behälters in einem Detektionsbereich; Ermitteln eines Durchmessers und/oder einer Wandstärke des Behälters im Detektionsbereich; und Ermitteln der Konzentration eines Gases auf Basis des aufgenommenen Transmissionsspektrums und des ermittelten Durchmessers und/oder der ermittelten Wandstärke.

Die DE 10 2014 112 969 A1 zeigt eine Vorrichtung und ein Verfahren zur Ermittlung einer Geometrie eines Behältnisses zur Verpackung eines Mediums mit einem Laser mit variierbarer Wellenlänge und einem Detektor. Dabei wird eine äußere Geometrie des Behältnisses aus einer gemessenen Durchlaufzeit des Behältnisses durch einen Detektionsbereich ermittelt. Eine Wandstärke kann dabei nicht direkt gemessen werden, sondern wird anhand einer angenommenen Korrelation der Wandstärke zur äußeren Geometrie aus einer Datenbank ausgelesen. Zusätzlich kann im Halsbereich eine Kohlenstoffdioxidkonzentration gemessen werden, wobei die ermittelte äußere Geometrie und die - anhand der ausgelesenen Wandstärke ermittelte - Innenkontur des Behältnisses in die Berechnungen mit einbezogen werden kann. Die für die Messung der äußeren Geometrie erforderliche Translationsbewegung des Behältnisses erfordert eine relativ aufwändige Apparatur und beeinflusst zudem die Probe zwischen den Messungen, sodass mehrere Messungen zu unterschiedlichen Ergebnissen führen können.

In der WO 2016/051341 A1 ist ein Sensor zur Detektion der Position eines Behälters entlang eines Förderbands offenbart, wobei der Behälter bei Eintritt in den Inspektionsbereich detektiert wird. Dieser Sensor entspricht dabei im Wesentlichen einer Lichtschranke: in Kenntnis des Zeitpunkts, in dem ein oberer Bereich des Behälters in den Inspektionsbereich eintritt, der Abmessungen eines solchen oberen Bereichs des Behälters und der momentanen Geschwindigkeit der Vorwärtsbewegung des Behälters wird eine Zeitspanne bestimmt, während der der von einer Laserquelle emittierte Laserstrahl den oberen Bereich des Behälters durchläuft. Auf diese Weise wird der Zeitraum einer Nutzsignalerfassung identifiziert. Die Geometrie des Behälters wird dadurch jedoch nicht bestimmt, sondern es wird allenfalls die Position des Behälters entlang des am Sensor vorbeilaufenden Förderbands zur Bestimmung des Eintritts in den Inspektionsbereich detektiert.

Die EP 2 627 967 B1 liegt nicht auf dem Gebiet der Ermittlung einer Konzentration eines Gases, sondern betrifft ein allgemeines System und Verfahren zur Messung der Wandstärke eines Behälters.

Die US 5,473,161 A zeigt ein Verfahren zur Messung des Karbonisierungsverlusts in Getränkeflaschen und zur Vorhersage ihrer Haltbarkeit unter Verwendung von Infrarot-Absorptionsspektroskopie.

Die WO 99/59738 A betrifft einen Sortierapparat und ein Verfahren zum Sortieren von Flaschen. Dabei wird die Form einschließlich des Durchmessers gemessen. Diese Messung verwendet zwei Messstäbe, die zusammen eine "Messgabel" bilden und an der Außenwand der Flasche entlanggeführt werden.

Die JP H05 126761 A betrifft ein Verfahren zur Erkennung einer Flaschenfarbe. Im Zusammenhang mit einem Ausführungsbeispiel ist beschrieben, dass aus einem ortsaufgelösten Bildsignal der Durchmesser der Flasche ermittelt werden kann.

Die JP 2002 013925 A betrifft die Messung unter anderem eines Außendurchmessers einer PET-Flasche. Die Messung basiert auf einer Lasermesseinrichtung, die eine Lichtquelle und einen Empfänger aufweist. Die Lichtquelle und der Empfänger sind auf gegenüberliegenden Seiten der Flasche angeordnet. Dabei wird der Durchmesser anhand der Abmessung des von der Flasche auf den Empfänger geworfenen Schattens ermittelt.

Es ist eine Aufgabe der Erfindung, im Zusammenhang mit der Ermittlung einer Konzentration eines Gases in einem Behälter die Geometrie des Behälters berücksichtigen zu können, jedoch ohne die Nachteile des Standes der Technik.

Die erfindungsgemäße Vorrichtung der eingangs angeführten Art sieht vor, dass die Vorrichtung einen Abstandsensor aufweist, wobei der Abstandsensor zur Ermittlung mindestens eines Abstands zwischen dem Abstandsensor und einem in der Halterung aufgenommenen Behälter im Detektionsbereich eingerichtet ist, wobei der Abstandsensor mit der Auswerteelektronik verbunden ist und wobei die Auswerteelektronik eingerichtet ist, den mindestens einen vom Abstandssensoren ermittelten Abstand bei der Ermittlung der Konzentration eines Gases zu berücksichtigen. Das bedeutet, dass verschiedene ermittelte Abstände in verschiedenen ermittelten Konzentrationen resultieren können, beispielsweise weil die Auswertung des aufgenommenen Transmissionsspektrums von dem mindestens einen ermittelten Abstand abhängig ist. Mit dem Abstand zum Behälter ist genauer der Abstand zu einer Behälterwand, beispielsweise deren Innenseite und/oder Außenseite, gemeint. Die Messeinrichtung umfasst beispielsweise ein optisches System, wobei das optische System eine im Wesentlichen monochromatische Lichtquelle zum Abstrahlen von Licht in einen in einer Halterung aufgenommenen Behälter und einen Lichtsensor zur Messung der Intensität des aus dem Behälter austretenden Lichts umfassen kann, wobei die Lichtquelle und der Lichtsensor mit einer Auswerteelektronik verbunden sein können. Gemäß einem Ausführungsbeispiel wird das Transmissionsspektrum von einem optischen System mit einem stimmbaren Laser und einem Lichtsensor im Kopfbereich ("head space") einer gehaltenen Flasche (z.B. in einer Aufhängung gehalten) oberhalb eines Flüssigkeitsspiegels gemessen.

Dementsprechend sieht das erfindungsgemäße Verfahren der eingangs angeführten Art vor, dass zum Ermitteln des Durchmessers und/oder der Wandstärke mindestens ein Abstand zwischen einem Abstandsensor und dem Behälter gemessen wird.

Für die Abstandmessung kann der Behälter in Ruhe bleiben. Diese Messung eignet sich daher besonders für eine Anwendung in einem Laborgerät zu Ermittlung der Konzentration (oder des Drucks oder Partialdruckes) eines Gases in einem geschlossenen Behälter, beispielsweise zur Qualitätssicherung.

Damit aus dem gemessenen Abstand auf einen Durchmesser des Behälters geschlossen werden kann, kann die Halterung eine Zentriervorrichtung aufweisen und der Abstandsensor zur Ermittlung eines Abstands zwischen dem Abstandsensor und eine Außenseite eines in der Halterung aufgenommenen Behälters eingerichtet sein. Mit der Zentriervorrichtung wird der Behälter zentriert, d. h. eine bestimmte Position der Mittelachse des Behälters erreicht, wobei der Abstand zwischen der von der Zentriervorrichtung vorgegebenen Mittelachse und dem Abstandsensor vorbekannt ist. Der Radius und Durchmesser des Behälters kann dann aus dem bekannten Abstand zur Mittelachse und dem gemessenen Abstand zur Oberfläche des Behälters ermittelt werden. Für die Ermittlung der Konzentration und die Auswertung des Transmissionsspektrums bedeutet ein geringerer Abstand einen größeren Behälterquerschnitt, und somit eine geringere Transmission im Vergleich zu einem Behälter mit derselben Gaskonzentration und einem kleineren Querschnitt. Auf Basis des ermittelten Durchmessers oder Querschnitts kann eine Schätzung der Weglänge im Behälter durchgeführt werden, welche beispielsweise über die Schichtdicke in das Labert-Beer'sche Gesetz eingeht, welches die wellenlängenabhängige Extinktion oder Absorbanz eines Materials als direkt proportional zur Schichtdicke zur Stoffmengenkonzentration postuliert.

Die Zentriervorrichtung kann beispielsweise mit einem austauschbaren Einschubelement ausgebildet sein. Die Austauschbarkeit des Einschubelements erlaubt eine Anpassung an unterschiedliche standardisierte Querschnitte im Mündungsbereich des Behälters, sodass dieselbe Vorrichtung für verschiedene Behälterformen verwendet werden kann.

Der Abstandsensor kann zur optischen Abstandsermittlung eingerichtet sein, d. h. ein optischer Abstandsensor. Ein solcher Abstandsensor ermöglicht eine berührungslose und zuverlässige Messung und ist zugleich wartungsarm. Die optische Messung kann beispielsweise auf Grundlage einer Laufzeitmessung (englisch: "Time of Flight" oder "ToF") eines Lichtsignals durchgeführt werden. Dabei kann beispielsweise ein VCSEL-Element eingesetzt werden ("Vertical Cavity Surface Emitting Laser").

Genauer kann der Abstandsensor beispielsweise zur optischen Ermittlung mindestens eines ersten Abstands zwischen dem Abstandsensor und einer Außenseite eines in der Halterung aufgenommenen Behälters und mindestens eines zweiten Abstands zwischen dem Abstandsensor und einer Innenseite des Behälters eingerichtet sein. Die beiden Abstandmessungen ermöglichen eine direkte Messung der Wandstärke des Behälters im Detektionsbereich, sodass die gemessene Wandstärke bei der Verarbeitung des Transmissionsspektrums berücksichtigt werden kann. Zur Ermittlung der beiden Abstände können Teilreflexionen an der Innenseite und der Außenseite des Behälters verwendet werden. Dabei kann ein erster Teil eines vom Abstandsensor abgestrahlten Lichtstrahls von einer Vorderfläche der Behälterwand reflektiert werden, während ein zweiter Teil von einer Rückfläche der Behälterwand reflektiert werden kann. Der Sensor kann sowohl den ersten als auch den zweiten Teil des reflektierten Lichtstrahls empfangen. Der räumliche Abstand zwischen dem ersten und zweiten Teil kann eine Dicke der Wand des Behälters anzeigen. Beispielsweise kann aus einer Angabe über den Abstand zwischen dem ersten und zweiten Teil des reflektierten Lichtstrahls und einem angenommenen Brechungsindex des Behälters die Behälterwandstärke errechnet werden. Aufgrund der direkten Messung der Wandstärke können auch verschiedene Wandstärken bei ansonsten gleicher Behältergeometrie erkannt und entsprechend berücksichtigt werden. Die Ermittlung der Wandstärke ist bereits bei einer Genauigkeit im Millimeterbereich nützlich für die Verbesserung der Genauigkeit der ermittelten Gaskonzentration. Alternativ oder zusätzlich zu den beiden Abstandmessungen kann aus der Helligkeit der vom Abstandsensor aufgenommenen Reflexion, beispielsweise einer Reflexion an einer Innenseite einer Behälterwand, grob auf die Wanddicke des Behälters geschlossen werden.

Analog und mit entsprechenden Vorteilen kann im Rahmen des offenbarten Verfahrens mindestens ein erster Abstand zwischen dem Abstandsensor und einer Außenseite des Behälters und mindestens ein zweiter Abstand zwischen dem Abstandsensor und einer Innenseite des Behälters gemessen werden und aus den beiden Abständen die Wandstärke des Behälters ermittelt werden.

Der Abstandsensor kann ein von der Messeinrichtung verschiedener Sensor sein. Diesem Fall ist der Abstandsensor ein separater Sensor, der beispielsweise mit einer handelsüblichen ("commercial off-the-shelf") Komponente umgesetzt werden kann, und nicht Teil der Messeinrichtung. D. h. der Abstandsensor wird nicht bei der Aufnahme des Transmissionsspektrums eingesetzt und kann - im Fall eines optischen Abstandsensors - im Allgemeinen einen anderen Wellenlängenbereich verwenden.

Weiters ist es möglich, dass die Auswerteelektronik eingerichtet ist, die von der Messeinrichtung verwendete Lichtintensität (d.h. die momentane oder über einen variablen Zeitraum für die Messung integrierte Lichtintensität) an die ermittelte Geometrie des Behälters anzupassen. Beispielsweise kann die Auswerteelektronik bei größerem Behälterdurchmesser und/oder größerer Wandstärke eine Lichtquelle der Messeinrichtung mit einer höheren Lichtintensität oder unter langsamerer Variation der Wellenlänge betreiben, um den Einfluss des Behälterdurchmessers und/oder der Wandstärke auf die absolute Signalstärke des aufgenommenen Transmissionsspektrums zu kompensieren und somit die Anforderungen an die Dynamik des Lichtsensors zu senken.

Im Zusammenhang mit dem offenbarten Verfahren kann analog und mit entsprechenden Vorteilen nach der Ermittlung des Durchmessers und/oder der Wandstärke des Behälters im Detektionsbereich das mindestens eine Transmissionsspektrum aufgenommen werden, wobei bei der Aufnahme des Transmissionsspektrums der ermittelte Durchmesser und/oder die ermittelte Wandstärke des Behälters berücksichtigt werden kann. Die Berücksichtigung kann z.B. in Form einer Anpassung der verwendeten Lichtintensität der Lichtquelle erfolgen.

Darüber hinaus kann die Vorrichtung zusätzlich einen Umgebungslichtsensor aufweisen. Der Umgebungslichtsensor kann mit der Auswerteelektronik verbunden sein, sodass externe, optional variierende, Einflüsse auf die von Lichtsensor aufgenommene Intensität berücksichtigt und kompensiert werden können.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Dabei zeigen im Einzelnen:
Fig. 1 schematisch eine Vorrichtung zur Ermittlung der Konzentration eines Gases in einem Behälter mit einer darin gehaltenen Flasche in einer schaubildlichen Ansicht;
Fig. 2 schematisch eine Draufsicht auf eine Messplattform der Vorrichtung gemäß Fig. 1;
Fig. 3 schematisch einen vertikalen Schnitt der Vorrichtung gemäß Fig. 1 gemäß der Linie III-III in Fig. 2;
Fig. 4 schematisch eine Seitenansicht auf eine Vorderseite der Messplattform gemäß Fig. 1;
Fig. 5 schematisch einen horizontalen Schnitt der Vorrichtung gemäß Fig. 4 gemäß der Linie V-V;
Fig. 6a-c schematisch drei verschiedene Einschubelemente zur Verwendung in der Vorrichtung gemäß Fig. 1 in einer schaubildlichen Ansicht; und
Fig. 7a-c schematisch Draufsichten der drei Einschubelemente gemäß den Figuren 6a-c.

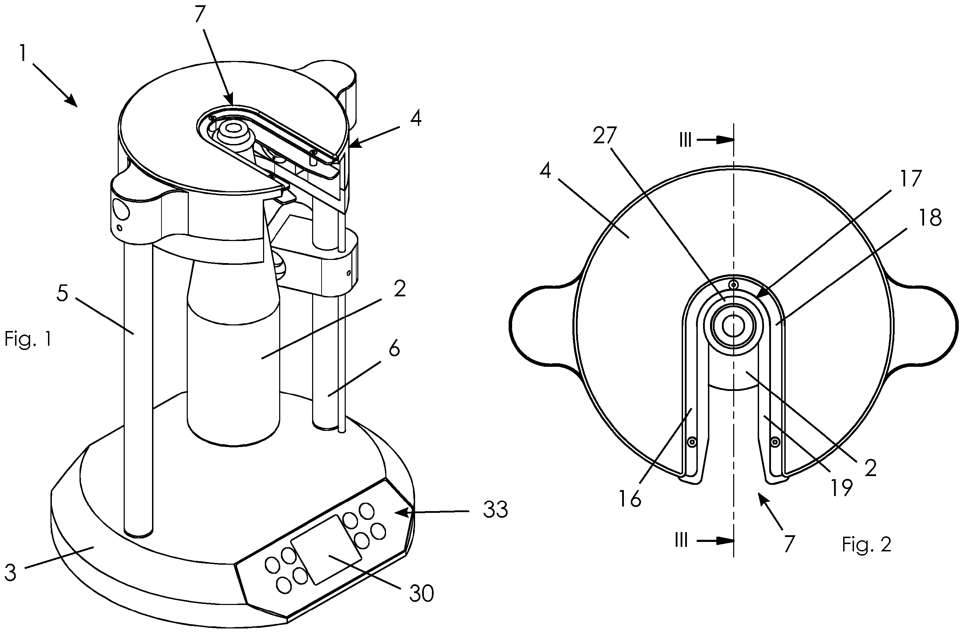

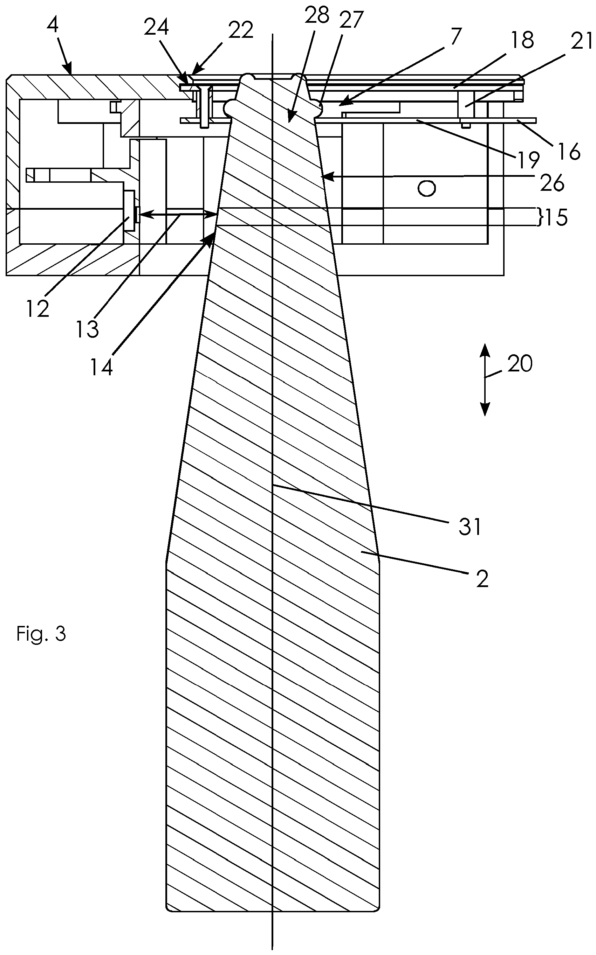

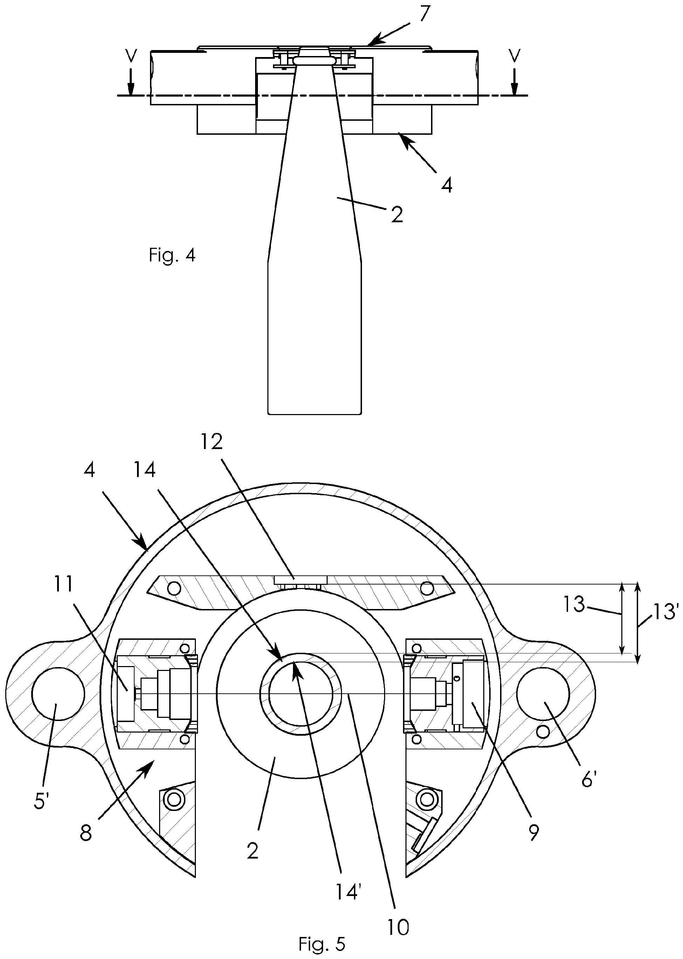

Die Figuren 1 bis 5 zeigen eine Vorrichtung 1 zur Ermittlung der Konzentration eines Gases in einem geschlossenen Behälter 2, hier einer gasdicht verschlossenen Glasflasche. Die Vorrichtung 1 umfasst einen Sockel 3 und eine Messplattform 4, die über zwei Stützen 5, 6 mit dem Sockel 3 verbunden ist. (Da Figuren 4 und 5 die Vorrichtung 1 der Einfachheit halber ohne Stützen und Sockel zeigen, sind nur die Ausnehmungen 5', 6' für die Stützen 5, 6 in der Messplattform 4 dargestellt.) Die Messplattform 4 weist eine Halterung 7 zur Aufnahme des Behälters 2 und eine Messeinrichtung 8 zur Aufnahme eines Transmissionsspektrums des Behälters 2 im Detektionsbereich der Messeinrichtung 8 auf. Die Messeinrichtung 8 umfasst eine im Wesentlichen monochromatische Lichtquelle 9 zum Abstrahlen von Licht in einen in der Halterung 7 aufgenommenen Behälter 2 entlang einer optischen Achse 10 und einen Lichtsensor 11 zur Messung der Intensität des aus dem Behälter 2 auf eine der Lichtquelle 9 gegenüberliegenden Seite austretenden Lichts. Die Lichtquelle 9 kann z.B. ein stimmbarer Dioden-Laser mit einer DFB (distributed feedback) Diode sein. Die Lichtquelle 9 und der Lichtsensor 11 sind hier nur schematisch dargestellt; geeignete Messeinrichtungen sind dem Fachmann geläufig, weshalb an dieser Stelle auf eine detaillierte technische Beschreibung verzichtet wird. Die Messeinrichtung 8 ist mit einer im Sockel 3 angeordneten Auswerteelektronik zu Ermittlung der Konzentration eines Gases auf Basis mindestens eines aufgenommenen Transmissionsspektrums elektrisch verbunden, sodass die Lichtquelle 9 von der Auswerteelektronik angesteuert werden der Lichtsensor 11 ausgelesen werden kann.

Im Bereich eines Scheitelpunkts der Halterung 7 ist ein von der Messeinrichtung 8 separater optischer Abstandsensor 12 angeordnet. Der Abstandsensor 12 ist im Wesentlichen in derselben horizontalen Ebene wie die optische Achse 10 angeordnet oder zumindest in einem Detektionsbereich 15 der Messeinrichtung 8 und zur optischen Ermittlung eines ersten Abstands 13 zwischen dem Abstandsensor 12 und einer Außenseite 14 des in der Halterung 7 aufgenommenen Behälters 2 und eines zweiten Abstands 13' zwischen dem Abstandsensor 12 und einer Innenseite 14' des Behälters 2 im Detektionsbereich 15 eingerichtet (siehe Figuren 4 und 5; die Wandstärke des Behälters ist nicht maßhaltig). Der Abstandsensor 12 ist mit der Auswerteelektronik verbunden. Die Auswerteelektronik ist eingerichtet, die vom Abstandssensor 12 ermittelten Abstände 13, 13' bei der Ermittlung der Konzentration eines Gases zu berücksichtigen. Am Abstandsensor 12 ist zusätzlich ein Umgebungslichtsensor integriert und ebenfalls mit der Auswerteelektronik verbunden.

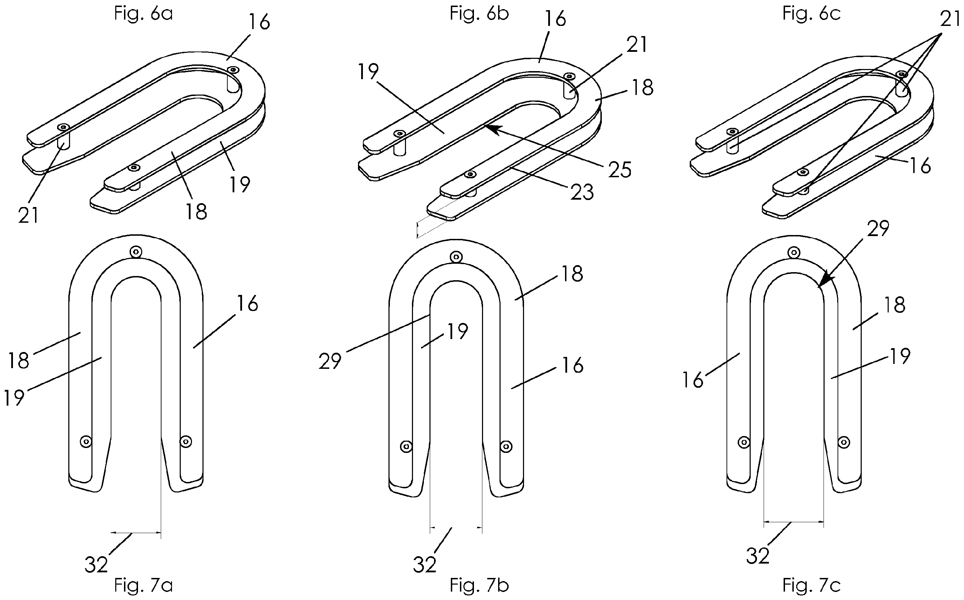

Die Halterung 7 der Messplattform 4 ist mit einem austauschbaren Einschubelement 16 ausgebildet. Das Einschubelement 16 bildet zusammen mit der Halterung 7 eine Zentriervorrichtung 17 zur Zentrierung des Behälters 2 in der Vorrichtung 1. Es ist aus zwei im Wesentlichen U-förmigen Platten 18, 19 gebildet, die in Verwendung in vertikale Richtung 20 versetzt angeordnet und durch drei Distanzringe 21 voneinander beanstandet verbunden sind. Eine obere Platte 18 des Einschubelements 16 weist einen mit einer Einschubaufnahme 22 der Halterung 7 korrespondierenden Außenrand 23 auf, sodass das Einschubelement 16 mit der oberen Platte 18 in eine U-förmige Nut 24 der Einschubaufnahme 22 aufgenommen werden kann. Der Innenrand 25 der unteren Platte 19 ist auf den Durchmesser eines Flaschenhalses 26 eines mit der Vorrichtung 1 zu verwendenden Flaschentyps abgestimmt. Beispielsweise ist der Innenrand 25 der unteren Platte 19 so dimensioniert, dass ein Ringwulst 27 des Flaschenhalses 26 im Bereich einer Flaschenmündung 28 auf der unteren Platte 19 aufliegt, wenn der Flaschenhals 26 in die Öffnung 29 der unteren Platte 19 aufgenommen ist. Im Scheitelpunkt der Öffnung 29 ist der Innenrand 25 an die Form des Flaschenhalses 26 in diesem Bereich angepasst ausgebildet (z.B. halbkreisförmig für einen runden Flaschenhals) und so relativ Einschubaufnahme 22 angeordnet, dass ein bis zum Anschlag eingeführter Behälter 2 zentriert wird und dessen Mittelachse 31 die optische Achse 10 kreuzt. Die Zentriervorrichtung 17 macht sich also die Tatsache zunutze, dass der Querschnitt einer Flasche im Bereich der Flaschenmündung 28 standardisiert ist. Außerdem basiert die Zentrierung auf der Annahme, dass der Behälter 2 eine spiegelsymmetrische Form hat, sodass eine Zentrierung im Mündungsbereich zugleich zu einer Zentrierung im Detektionsbereich 15 führt. Die Länge der Distanzringe 21 kann sich zwischen den einzelnen Einschubelementen 16 unterscheiden (siehe Figuren 6a-c und 7a-c) und dient dazu, den Abstand zwischen der unteren Platte 19 und der optischen Achse 10 festzulegen, sodass die Halterung 7 nicht nur in einer horizontalen Ebene sondern auch in vertikale Richtung 20 eine geeignete Anordnung des Behälters 2 relativ zur optischen Achse 10 erzielt. Beispielsweise kann vorgesehen sein, dass die optische Achse 10 bei einem Drittel der Höhe des Kopfbereichs oberhalb eines Flüssigkeitsspiegels im Behälter 2 liegen soll. Aufgrund der unterschiedlichen Dichte der im Kopfbereich aufgenommenen Gaskomponenten ist die Reproduzierbarkeit der vertikalen Anordnung wichtig für eine hohe Genauigkeit der Ermittlung der Gaskonzentration.

Zur Ermittlung der Konzentration eines Gases im Kopfbereich einer geschlossenen Getränkeflasche mittels der hier gezeigten Vorrichtung 1 würde ein Benutzer vor der Durchführung der Messungen ein zur Getränkeflaschen passendes Einschubelement 16 auswählen und in die Einschubaufnahme 22 einführen. Anschließend kann die Getränkeflasche in das Einschubelement 16 eingeführt und somit in der Halterung 7 aufgenommen, genauer aufgehängt und zentriert, werden. Auf diese Weise ist die Getränkeflasche reproduzierbar in der Vorrichtung 1 positioniert und von der Zentriervorrichtung 17 zentriert. Anschließend wählt der Benutzer auf einem Eingabefeld 33 am Sockel 3 das gewünschte Messprogramm aus, beispielsweise das Messprogramm zur Ermittlung der Konzentration von CO2 im Kopfbereich der Getränkeflasche.

Entsprechend der Benutzereingaben wird dann das Messverfahren von der Auswerteelektronik durchgeführt und abschließend die ermittelte Konzentration auf dem Display 30 am Sockel 3 ausgegeben. Im Einzelnen läuft das Messverfahren gemäß dem vorliegenden Ausführungsbeispiel folgendermaßen ab: Zunächst wird der Durchmesser und die Wandstärke des Behälters 2 im Detektionsbereich 15 ermittelt. Dabei wird ein erster Abstand 13 zwischen dem Abstandsensor 12 und einer Außenseite 14 des Behälters 2 und ein zweiter Abstand 13' zwischen dem Abstandsensor 12 und einer Innenseite 14' des Behälters 2 (d.h. der Grenzfläche zwischen Behälter und darin eingeschlossener Probe) gemessen und aus den beiden Abständen 13, 13' die Wandstärke des Behälters 2 ermittelt. Aus dem zweiten Abstand 13' wird die Weglänge entlang der optischen Achse 10 im Inneren des Behälters 2 ermittelt, d. h. die Schichtdicke des untersuchten Mediums. Dazu wird vom Abstand des Abstandsensors 12 zur Mittelachse 31 der zweite Abstand 13' abgezogen und das Ergebnis verdoppelt. Anschließend wird mithilfe der Messeinrichtung 8 mindestens ein Transmissionsspektrum des Behälters 2 im Detektionsbereich 15 aufgenommen. Schließlich wird die Konzentration des gesuchten (vorbestimmten) Gases auf Basis des aufgenommenen Transmissionsspektrums, des ermittelten Weglänge und der ermittelten Wandstärke ermittelt.

In den Figuren 6a bis 6c sowie 7a bis 7c sind drei verschiedene Einschubelemente 16 dargestellt. Jedes Einschubelement 16 hat eine obere Platte 18 und eine untere Platte 19, die jeweils durch drei Distanzringe 21 verbunden sind. Die drei zeigten Einschubelemente 16 unterscheiden sich im Wesentlichen durch die Breite 32 der Öffnung 29 der unteren Platte 19, welche auf den Durchmesser eines aufzunehmenden Flaschenhalses abgestimmt ist. Bei dem in den Figuren 6a und 7a dargestellten Einschubelement 16 ist diese Breite 26 mm, für einen Flaschenhalsdurchmesser von zwischen 25,5-26 mm. Bei dem in den Figuren 6b und 7b dargestellten Einschubelement 16 ist diese Breite 27 mm, für einen Flaschenhalsdurchmesser von zwischen 26,5-27 mm. Und bei dem in den Figuren 6c und 7c dargestellten Einschubelement 16 ist diese Breite 31 mm, für einen Flaschenhalsdurchmesser von zwischen 30,5-31 mm.

## Patentansprüche

1. Vorrichtung (1) zur Ermittlung der Konzentration eines Gases in einem Behälter (2), mit einer Halterung (7) zur Aufnahme eines Behälters (2), mit einer Messeinrichtung (8) zur Aufnahme eines Transmissionsspektrums des Behälters (2) in einem Detektionsbereich (15) und mit einer mit der Messeinrichtung (8) verbundenen Auswerteelektronik zur Ermittlung der Konzentration eines Gases auf Basis mindestens eines aufgenommenen Transmissionsspektrums, **dadurch gekennzeichnet, dass** die Vorrichtung einen Abstandsensor (12) aufweist, wobei der Abstandsensor (12) zur Ermittlung mindestens eines Abstands (13) zwischen dem Abstandsensor (12) und einem in der Halterung (7) aufgenommenen Behälter (2) im Detektionsbereich (15) eingerichtet ist, wobei der Abstandsensor (12) mit der Auswerteelektronik verbunden ist und wobei die Auswerteelektronik eingerichtet ist, den mindestens einen vom Abstandssensor (12) ermittelten Abstand (13) bei der Ermittlung der Konzentration eines Gases zu berücksichtigen.

2. Vorrichtung (1) nach Anspruch 1, **dadurch gekennzeichnet, dass** die Halterung (7) eine Zentriervorrichtung (17) aufweist und dass der Abstandsensor (12) zur Ermittlung eines Abstands (13) zwischen dem Abstandsensor (12) und einer Außenseite (14) eines in der Halterung (7) aufgenommenen Behälters (2) eingerichtet ist.

3. Vorrichtung (1) nach Anspruch 2, **dadurch gekennzeichnet, dass** die Zentriervorrichtung (17) mit einem austauschbaren Einschubelement (16) ausgebildet ist.

4. Vorrichtung (1) nach einem der Ansprüche 1 bis 3, **dadurch gekennzeichnet, dass** der Abstandsensor (12) zur optischen Abstandsermittlung eingerichtet ist.

5. Vorrichtung (1) nach Anspruch 4, **dadurch gekennzeichnet, dass** der Abstandsensor (12) zur optischen Ermittlung mindestens eines ersten Abstands (13) zwischen dem Abstandsensor (12) und einer Außenseite (14) eines in der Halterung (7) aufgenommenen Behälters (2) und mindestens eines zweiten Abstands zwischen dem Abstandsensor (12) und einer Innenseite des Behälters (2) eingerichtet ist.

6. Vorrichtung (1) nach einem der Ansprüche 1 bis 5, **dadurch gekennzeichnet, dass** der Abstandsensor (12) ein von der Messeinrichtung (8) verschiedener Sensor ist.

7. Vorrichtung (1) nach einem der Ansprüche 1 bis 6, **dadurch gekennzeichnet, dass** die Auswerteelektronik eingerichtet ist, die von der Messeinrichtung (8) verwendete Lichtintensität an die ermittelte Geometrie des Behälters (2) anzupassen.

8. Vorrichtung (1) nach einem der Ansprüche 1 bis 7, **dadurch gekennzeichnet, dass** die Vorrichtung (1) zusätzlich einen Umgebungslichtsensor aufweist.

9. Verfahren zur Ermittlung der Konzentration eines Gases in einem Behälter (2), umfassend die folgenden Schritte:
Aufnehmen mindestens eines Transmissionsspektrums des Behälters in einem Detektionsbereich (15);
Ermitteln eines Durchmessers und/oder einer Wandstärke des Behälters (2) im Detektionsbereich (15); und
Ermitteln der Konzentration eines Gases auf Basis des aufgenommenen Transmissionsspektrums und des ermittelten Durchmessers und/oder der ermittelten Wandstärke,
**dadurch gekennzeichnet, dass** zum Ermitteln des Durchmessers und/oder der Wandstärke mindestens ein Abstand zwischen einem Abstandsensor (12) und dem Behälter (2) gemessen wird, wobei bei der Abmessung des Abstands, sich der Behälter im Detektionsbereich befindet.

10. Verfahren nach Anspruch 9, **dadurch gekennzeichnet, dass** mindestens ein erster Abstand (13) zwischen dem Abstandsensor (12) und einer Außenseite (14) des Behälters (2) und mindestens ein zweiter Abstand zwischen dem Abstandsensor (12) und einer Innenseite des Behälters (2) gemessen wird und aus den beiden Abständen die Wandstärke des Behälters (2) ermittelt wird.

11. Verfahren nach einem der Ansprüche 9 oder 10, **dadurch gekennzeichnet, dass** nach der Ermittlung des Durchmessers und/oder der Wandstärke des Behälters im Detektionsbereich (15) das mindestens eine Transmissionsspektrum aufgenommen wird, wobei bei der Aufnahme des Transmissionsspektrums der ermittelte Durchmesser und/oder die ermittelte Wandstärke des Behälters berücksichtigt wird.

## Claims

1. Apparatus (1) for determining the concentration of a gas in a container (2), comprising a holder (7) for accommodating a container (2), comprising a measuring device (8) for recording a transmission spectrum of the container (2) in a detection region (15), and comprising an evaluation electronic system connected to the measuring device (8) for determining the concentration of a gas on the basis of at least one recorded transmission spectrum, **characterised in that** the apparatus comprises a distance sensor (12), the distance sensor (12) being configured to determine at least one distance (13) between the distance sensor (12) and a container (2) accommodated in the holder (7) in the detection region (15), the distance sensor (12) being connected to the evaluation electronic system and the evaluation electronic system being configured to take into account the at least one distance (13) determined by the distance sensor (12) when determining the concentration of a gas.

2. Apparatus (1) according to claim 1 **characterised in that** the holder (7) has a centring device (17) and **in that** the distance sensor (12) is configured to determine a distance (13) between the distance sensor (12) and an outer face (14) of a container (2) accommodated in the holder (7).

3. Apparatus (1) according to claim 2, **characterised in that** the centring device (17) is formed having an exchangeable insertion element (16).

4. Apparatus (1) according to any of claims 1 to 3, **characterised in that** the distance sensor (12) is configured for optical distance determination.

5. Apparatus (1) according to claim 4, **characterised in that** the distance sensor (12) is configured to optically determine at least one first distance (13) between the distance sensor (12) and an outer face (14) of a container (2) accommodated in the holder (7) and at least one second distance between the distance sensor (12) and an inner face of the container (2).

6. Apparatus (1) according to any of claims 1 to 5, **characterised in that** the distance sensor (12) is a sensor that is different from the measuring device (8).

7. Apparatus (1) according to any of claims 1 to 6, **characterised in that** the evaluation electronic system is configured to adapt the light intensity used by the measuring device (8) to the determined geometry of the container (2).

8. Apparatus (1) according to any of claims 1 to 7, **characterised in that** the apparatus (1) additionally comprises an ambient-light sensor.

9. Method for determining the concentration of a gas in a container (2), comprising the following steps:
recording at least one transmission spectrum of the container in a detection region (15);
determining a diameter and/or a wall thickness of the container (2) in the detection region (15); and
determining the concentration of a gas on the basis of the recorded transmission spectrum and the determined diameter and/or the determined wall thickness,
**characterised in that** in order to determine the diameter and/or wall thickness, at least one distance between a distance sensor (12) and the container (2) is measured, the container being located in the detection region when measuring the distance.

10. Method according to claim 9, **characterised in that** at least one first distance (13) between the distance sensor (12) and an outer face (14) of the container (2) and at least one second distance between the distance sensor (12) and an inner face of the container (2) is measured and the wall thickness of the container (2) is determined from the two distances.

11. Method according to either claim 9 or claim 10, **characterised in that** after the determination of the diameter and/or the wall thickness of the container in the detection region (15), the at least one transmission spectrum is recorded, the determined diameter and/or the determined wall thickness of the container being taken into account when recording the transmission spectrum.

## Revendications

1. Dispositif (1) pour déterminer la concentration d'un gaz dans un récipient (2), avec un support (7) pour recevoir un récipient (2), avec un dispositif de mesure (8) pour enregistrer un spectre de transmission du récipient (2) dans une zone de détection (15) et avec une électronique d'évaluation reliée au dispositif de mesure (8) pour déterminer la concentration d'un gaz sur la base d'au moins un spectre de transmission enregistré, **caractérisé en ce que** le dispositif comporte un capteur de distance (12), où le capteur de distance (12) est configuré pour déterminer au moins une distance (13) entre le capteur de distance (12) et un récipient (2) reçu dans le support (7) dans la zone de détection (15), où le capteur de distance (12) est relié à l'électronique d'évaluation et où l'électronique d'évaluation est configurée pour prendre en compte la au moins une distance (13) déterminée par le capteur de distance (12) lors de la détermination de la concentration d'un gaz.

2. Dispositif (1) selon la revendication 1, **caractérisé en ce que** le support (7) présente un dispositif de centrage (17) et **en ce que** le capteur de distance (12) est configuré pour déterminer une distance (13) entre le capteur de distance (12) et un côté extérieur (14) d'un récipient (2) reçu dans le support (7).

3. Dispositif (1) selon la revendication 2, **caractérisé en ce que** le dispositif de centrage (17) est configuré avec un élément d'insertion (16) interchangeable.

4. Dispositif (1) selon l'une des revendications 1 à 3, **caractérisé en ce que** le capteur de distance (12) est configuré pour la détermination optique de distance.

5. Dispositif (1) selon la revendication 4, **caractérisé en ce que** le capteur de distance (12) est configuré pour la détermination optique d'au moins une première distance (13) entre le capteur de distance (12) et un côté extérieur (14) d'un récipient (2) reçu dans le support (7) et d'au moins une deuxième distance entre le capteur de distance (12) et un côté intérieur du récipient (2).

6. Dispositif (1) selon l'une des revendications 1 à 5, **caractérisé en ce que** le capteur de distance (12) est un capteur différent du dispositif de mesure (8).

7. Dispositif (1) selon l'une des revendications 1 à 6, **caractérisé en ce que** l'électronique d'évaluation est configurée pour adapter l'intensité lumineuse utilisée par le dispositif de mesure (8) à la géométrie du récipient (2) déterminée.

8. Dispositif (1) selon l'une des revendications 1 à 7, **caractérisé en ce que** le dispositif (1) comporte en outre un capteur de lumière ambiante.

9. Procédé pour déterminer la concentration d'un gaz dans un récipient (2), comprenant les étapes suivantes:
enregistrement d'au moins un spectre de transmission du récipient dans une zone de détection (15);
détermination d'un diamètre et/ou d'une épaisseur de paroi du récipient (2) dans la zone de détection (15); et
détermination de la concentration d'un gaz sur la base du spectre de transmission enregistré et du diamètre déterminé et/ou de l'épaisseur de paroi déterminée,
**caractérisé en ce que**, pour déterminer le diamètre et/ou l'épaisseur de paroi, au moins une distance entre un capteur de distance (12) et le récipient (2) est mesurée, où le récipient se trouve dans la zone de détection lors de la mesure de la distance.

10. Procédé selon la revendication 9, **caractérisé en ce qu'**au moins une première distance (13) entre le capteur de distance (12) et un côté extérieur (14) du récipient (2) et au moins une deuxième distance entre le capteur de distance (12) et un côté intérieur du récipient (2) est mesurée et l'épaisseur de paroi du récipient (2) est déterminée à partir des deux distances.

11. Procédé selon l'une des revendications 9 ou 10, **caractérisé en ce qu'**après la détermination du diamètre et/ou de l'épaisseur de paroi du récipient dans la zone de détection (15), le au moins un spectre de transmission est enregistré, où le diamètre déterminé et/ou l'épaisseur de paroi déterminée du récipient est pris en compte lors de l'enregistrement du spectre de transmission.
